# EUROPÄISCHE PATENTSCHRIFT

(11) **EP 3 178 888 B1**
(45) Veröffentlichungstag und Bekanntmachung des Hinweises auf die Patenterteilung: **26.08.2020**
(21) Anmeldenummer: 15198350.9
(22) Anmeldetag: 08.12.2015
(51) Int. Cl.: C09D 5/00, C08K 9/08, C09D 15/00, C09D 7/40, C09D 7/62

(54) **FÜLLSTOFF FÜR EINE OBERFLÄCHENBEHANDLUNGSZUSAMMENSETZUNG**
FILLER FOR A SURFACE TREATMENT COMPOSITION
MATIERE DE REMPLISSAGE POUR UNE COMPOSITION DE TRAITEMENT DE SURFACE

(43) Veröffentlichungstag der Anmeldung: 14.06.2017
(73) Patentinhaber: Gebrüder Dorfner GmbH & Co. Kaolin- und Kristallquarzsand-Werke KG, 92242 Hirschau (DE)
(72) Erfinder: Eiberweiser, Susanne, 92637 Weiden (DE); von Laufenberg, Daniel, 92242 Hirschau (DE)
(74) Vertreter: Hannke, Christian

(56) Entgegenhaltungen:
- EP-A- 0 407 085
- EP-A1- 0 487 350
- EP-A1- 2 360 120
- WO-A1-98/36029
- WO-A1-2005/071023
- WO-A1-2010/103020
- WO-A1-2013/147701
- WO-A1-2014/043198
- CN-A- 103 965 846
- JP-A- 2001 026 666
- JP-A- 2012 162 686
- DATABASE WPI Week 200778 Thomson Scientific, London, GB; AN 2007-836494 -& JP 2007 270095 A (SK KAKEN KK) 18 October 2007 (2007-10-18)
- DATABASE WPI Week 201259 Thomson Scientific, London, GB; AN 2012-L30456 -& JP 2012 162686 A (TOYO INK MFG CO LTD) 30 August 2012 (2012-08-30)

## Beschreibung

Die Erfindung betrifft die Verwendung von Partikeln mit einer Oberflächenbeschichtung, die dem jeweiligen Partikel eine positive Oberflächenladung verleihen, zur Behandlung von Holz.

Aus dem Stand der Technik sind verschiedene Oberflächenbehandlungszusammensetzungen bekannt. Dabei kann es sich beispielsweise um Lacke, Lasuren, Imprägnierungen, Coatings, Beizen, Eloxieren, Pulverbeschichtungen, galvanische Metallabscheidungen, Oxidation (z.B. Eloxieren) und andere handeln. Für einige der genannten Verfahren ist bekannt, dass die Oberflächenbehandlung auch negative Eigenschaften auf das Erscheinungsbild und/oder Eigenschaften des behandelten Materials haben kann. Ein Beispiel hierfür ist das Aufbringen von Lacken auf bestimmte Oberflächen, da beispielsweise durch das im Lack enthaltene Lösungsmittel in Abhängigkeit des zu beschichtenden Materials dieses beschädigt werden kann.

Im Fall von Oberflächenbehandlungszusammensetzungen, die dem zu behandelnden Material eine bestimmte Farbe verleihen sollen, sind ebenfalls negative Wechselwirkungen zwischen dem Material selbst und der Oberflächenbehandlungszusammensetzung bekannt. Diese Wechselwirkungen können beispielsweise dazu führen, dass aus dem Material Bestandteile in die Oberflächenbehandlungszusammensetzung gelangen, die das Erscheinungsbild der Oberfläche verändern da sie entweder selbst farbig sind und durch ihre Eigenfarbe wahrnehmbar sind oder den Farbton der in einer Oberflächenbehandlungszusammensetzung ggf. enthaltenen Pigmente verändern und so als Farbveränderung wahrnehmbar sind. Da viele Farbstoffe durch ein konjugiertes π-Elektronensystem gekennzeichnet sind und dieses stark durch Wechselwirkungen mit elektrischen Ladungen oder elektrischen Partialladungen beeinflusst werden kann, ist insbesondere die Diffusion von Anionen oder Kationen aus dem oberflächenbehandelten Material in die Oberflächenbeschichtung problematisch. Besonders auffällig ist dies bei dem sogenannten Bluten (oder Durchbluten) von Holz. Die im Holz enthaltenen meist ionischen Inhaltsstoffe sind in der Regel wasserlöslich. Durch die verstärkte Verwendung von wasserbasierten Lösungsmittelsystemen für moderne Farben, Lacke und andere Oberflächenbehandlungszusammensetzungen werden von diesen die Inhaltsstoffe des Holzes vermehrt herausgelöst und können somit besonders in den Wasserbasierten Systemen mit der Oberflächenbeschichtung wechselwirken. Da Oberflächenbeschichtungen auf Basis von organischen Lösungsmitteln immer weiter verdrängt werden, ist dieses sogenannte "Durchbluten" ein vermehrt auftretendes Problem.

Dieses Problem tritt nicht bei allen Holzarten in gleichem Maße auf. Unterschiede können beispielsweise durch die unterschiedlichen Holzinhaltsstoffe von verschiedenen Arten hervorgerufen werden. Auch der Standort und die Wachstumsbedingungen können einen Einfluss haben, da auch sie die Holzinhaltsstoffe und deren prozentuale Verteilung beeinflussen können. Nadelhölzern unterscheiden sich in Bezug auf die Neigung zum Durchbluten und auch in Bezug auf die austretenden Substanzen meist von Laubholzarten. Bei den Laubholzarten sind v.a. Tropenhölzer sehr reich an verfärbenden Holzinhaltsstoffen. Auch bei Holzabschnitten aus einem einzelnen Baum kann es lokal zu verschieden starkem Durchbluten kommen. Insbesondere im Bereich von Astlöchern oder Astansätzen tritt Durchbluten verstärkt auf, da an diesen Stellen die Inhaltsstoffe besonders konzentriert sind, die Ausrichtung der Kapillaren dies begünstigt oder die Inhaltsstoffe aus anderen Gründen an diesen Stellen besonders leicht austreten können.

Aus dem Stand der Technik ist bekannt, dass für das Durchbluten von Holz besonders anionische Bestandteile relevant sind. Es sind daher Oberflächenbehandlungszusammensetzungen zur Behandlung von Holz auf dem Markt erhältlich, die kationische Bindemittel enthalten, die diese anionischen Bestandteile aus dem Holz binden sollen, wenn diese aus dem Holz austreten. Bis zu einem gewissen Grad sind derartige Oberflächenbehandlungszusammensetzungen wirksam. Es hat sich jedoch herausgestellt, dass sich im Laufe der Zeit aufgrund der weiterhin möglichen Mobilität der Anionen in der Oberflächenbeschichtung ein Gradient der Anionenkonzentration einstellt. Somit bewirken die genannten Oberflächenbehandlungszusammensetzungen lediglich die Verringerung von lokal auftretenden großen Konzentrationen der Anionen der Holzinhaltsstoffe, können deren Mobilität im Inneren einer Oberflächenbeschichtung jedoch nicht vollständig verhindern. Dementsprechend können somit lokale Verfärbungen verringert werden, jedoch resultiert dies zwangsläufig in einer leichten Farbänderung in anderen Bereichen.

Anwendungen für Füllstoffe sind viele bekannt. So beschreibt beispielsweise die WO 98/36029 A1 die Verwendung eines kalzinierte teilchenförmiges Kaolin-Tonpigments einer sehr geringen mittleren Partikelgröße D₉₀ < 2 µm als Füllstoff für ein gestrichenes Tintenstrahlpapier.

Auch Polymere werden als Füllstoffe eingesetzt. So beschreibt die EP 0 407 085 A kationische Polymerpartikel, die als Teil einer Oberflächenbeschichtung z.B. auf Holz aufgetragen werden können und so das Austreten von wasserlöslichen Farbstoffen verhindern oder zumindest verlangsamen sollen.

Die WO 2010/103020 A1 beschreibt ein weiteres Füllstoffsystem für Beschichtungszusammensetzungen umfassend kolloidale Silika-Partikel von bis zu 150 nm, welche mit zwei verschiedenen Silanen beschichtet sind. Eines der Silane weist eine Epoxy-Funktionalität auf und das andere keine Epoxy-Funktionalität. Die kolloidal vorliegenden Partikel können verwendet werden.

Aus JP 2007 270095 A ist wiederum eine für Holz geeignete Oberflächenbehandlungszusammensetzung bekannt, welche der Oberfläche eine besonders gute Witterungsbeständigkeit, insbesondere gegenüber UV-Strahlung, verleihen soll. Die dafür vorgesehenen Füllstoffpartikel umfassen einen anorganischen Feststoff, der eine Oberflächenbeschichtung aus einer Piperidin-Komponente und einer Alkoxysilyl-Komponente aufweist.

Die JP 2012 162686 A offenbart eine Harzzusammensetzung, welche als Oberflächenschutz auf Folien aufgebracht werden kann. Sie dient dazu, die Folie schmutzabweisend auszurüsten und die Adhäsion zu reduzieren. Die Zusammensetzung umfasst Siliziumdioxid-Partikel, welche mit zwei verschiedenen Silikonharzen beschichtet sind, wobei eines eine Amin-Funktion aufweist und das andere keine Amin-Funktion aufweist.

Aus EP 2 360 120 A1 ist eine wässrige Dispersion aus gefällter Kieselsäure bekannt. Diese ist zur Herstellung von Papierstrichen für glänzendes Photopapier für den Tintenstrahldruck geeignet. Die gefällte und gemahlene Kieselsäure ist mit einem Aminosilan beschichtet, wodurch sie in der Dispersion kationisch stabilisiert ist. Die einzelnen Partikel weisen einen äußerst geringen mittleren Durchmesser d₅₀ im Bereich zwischen 50 und 500 nm auf.

Die EP 0 487 350 A1 beschreibt eine Folie, die ein Substrat und einen Überzug umfasst, wobei letzterer ein Pigment und ein Bindemittel mit einem Polyvinylalkohol umfaßt. Als weitere Bindemittelkomponente sind Styrol/Vinylpyrrolidon-Copolymere vorgeschlagen.

WO 2014/043198 A1 offenbart eine Oberflächenbeschichtungszusammensetzung, die auch Behandlung von Holz verwendet werden könnte. Die Oberflächenbeschichtungszusammensetzung enthält Siliciumdioxid-Partikel ("silica particles"), deren Oberflächen mit einem Aminosilan funktionalisiert sind. Die Siliciumdioxid-Partikel weisen eine mittlere Partikelgröße von 10 µm auf.

Aus der JP 2001 026666 A ist ein anorganischer Füllstoff, bekannt, der mit einem kationischen Polymer oberflächenbehandelt ist. Weiterhin ist er mit einem organischen Additiv beschichtet. Seine durchschnittliche Teilchengröße maximal 3 µm.

Die CN 103 965 846 A betrifft ein zweikomponentiges Dichtmittel, welches mit Epoxidharz beschichtete Partikel und mit Polyamin beschichtete Partikel im Massenverhältnis von 1:2 umfasst. Die Partikel können anorganisch sein und sind mit 10 % Epoxidharz bezogen auf die Trägerpartikelmasse beschichtet.

Der vorliegenden Erfindung liegt daher die Aufgabe zugrunde, eine neue Verwendung für einen Füllstoff einer Oberflächenbehandlungszusammensetzung aufzuzeigen.

Gelöst wird diese Aufgabe durch eine Verwendung gemäß Anspruch 1.

Nicht beansprucht, aber offenbart ist ein Füllstoff für eine Oberflächenbehandlungszusammensetzung, welcher sich dadurch auszeichnet, dass der Füllstoff Partikel umfasst, die eine Oberflächenbeschichtung aufweisen, die dem jeweiligen Partikel eine positive Oberflächenladung verleihen. Durch diese positive Oberflächenladung ist es möglich, aus dem zu behandelnden Material austretenden Anionen lokal zu binden und so deren Mobilität drastisch einzuschränken. Als positive Oberflächenladung soll jegliche Oberflächenladung verstanden werden. Somit sind auch Partialladungen eingeschlossen. Es ist jedoch bevorzugt, wenn die Oberfläche selbst einen Ionischen - genauer kationischen Charakter - aufweist, da so eine besonders effiziente Bindung der Anionen möglich ist.

Eine einen solchen Füllstoff umfassende Oberflächenbehandlungszusammensetzung bietet den Vorteil, dass nicht die gesamte Oberflächenbehandlungszusammensetzung einen kationischen Charakter aufweist sondern die positiv geladenen Zentren lokal vorliegen und räumlich voneinander getrennt sind, wodurch das weiterdiffundieren der Anionen von einem positiv geladenen Zentrum zum benachbarten positiv geladenen Zentrum erschwert oder - je nach Umgebungsbedingungen - sogar vollständig verhindert wird. Somit ergeben sich wesentliche Vorteile gegenüber Oberflächenbehandlungszusammensetzung bei denen die positiv geladenen Zentrum derart nah beieinander und gleichmäßig verteilt vorliegen, dass die energetische Barriere für einen Wechsel eines Anions von einem Ladungszentrum auf das benachbarte Ladungszentrum zu gering ist, um die Diffusion von Anionen durch die Oberflächenbehandlungszusammensetzung wirksam zu verhindern oder zu verlangsamen. Eine solche Verteilung mit einer Vielzahl von in geringem Abstand vorliegenden Ladungszentren könnte beispielsweise durch ein Bindemittel bereitgestellt werden, das ionische Gruppen enthält.

Als besonders geeignet haben sich Füllstoffe erwiesen, bei denen die Partikel eine Trägerpartikelgröße (d₅₀) aufweisen, die im Bereich zwischen 0,01 µm und 5 mm, bevorzugt im Bereich zwischen 0,1 µm und 1 mm, besonders bevorzugt im Bereich zwischen 1 µm und 100 µm liegt. Durch diese - und insbesondere die besonders bevorzugte Größe im Bereich zwischen 1 µm und 100 µm kann einerseits gewährleistet werden, dass die Partikel und somit auch die Ladungszentren einerseits ausreichend lokal zentriert sind um die oben beschriebene Diffusion der Anionen zu unterbinden, andererseits jedoch auch derart homogen über die gesamte Oberflächenbeschichtung verteilt vorliegen, dass überall in der Oberflächenbeschichtung Ladungszentren derart in der Nähe der aus dem zu behandelnden Material austretenden Anionen liegen, dass die effektiv abgefangen bzw. gebunden werden können. Diese Größe der Trägerpartikelgröße wirkt sich auch auf weitere Eigenschaften der Oberflächenbeschichtung wie z.B. Haptik, Deckvermögen, Nassabrieb und andere vorteilhaft aus. Somit kann durch diese Partikel nicht nur Durchbluten verhindert bzw. reduziert werden, sie können in Ihrer Eigenschaft als Füllstoff auch weitere positive Effekte haben.

Die oben angegebenen als auch die im Folgenden genannten Partikelgröße beziehen sich soweit nicht explizit anders angegeben jeweils auf die Trägerpartikelgröße. Soweit nicht anders angegeben ist die Partikelgröße als d₅₀-Wert angegeben. Gemessen wird dieser Wert - soweit nicht anders angegeben mittels Sedimentation (Sedigraph, z.B. Sedigraph 5120).

Es ist bevorzugt, dass die (Träger-) Partikel ausgewählt sind aus einer Gruppe, die Talk, Glimmer, Glaskugeln, Glasmehl, Erdalkalicarbonate, bevorzugt CaCO₃, Kaolin (nativ und/oder kalziniert), Quarz, Quarzmehl und Diatomeenerde umfasst. Diese Substanzen haben sich als vorteilhaft erwiesen, da sie einerseits in großer Menge verfügbar sind, andererseits jedoch andere Eigenschaften verschiedener bekannter und auf dem Markt befindlicher Oberflächenbehandlungszusammensetzung nicht negativ beeinflussen. In einigen Fällen werden diese (nicht oberflächenmodifizierten) Trägerpartikel bekannten Oberflächenbehandlungszusammensetzung bereits als Füllstoff zugesetzt. Somit bieten die Materialien aus der oben genannten Gruppe eine besonders gute Kompatibilität zu bekannten Systemen. Es ist jedoch auch möglich, neue Systeme auf Basis der oben beschriebenen Füllstoffpartikel zu formulieren und/oder bekannten Systemen andere (Systemfremde) Füllstoffpartikel zuzusetzen.

Weiterhin ist bevorzugt, dass die Oberflächenladung in einem weiten pH-Bereich ihre positive (Partial-) Ladung behält. Bevorzugt ist daher, dass die Oberflächenladung unterhalb eines pH-Werts von 10, bevorzugt unterhalb eines pH-Werts von 11, weiter bevorzugt unterhalb eines pH-Werts von 12 und besonders bevorzugt unterhalb eines pH-Werts von 13 kationisch vorliegt.

Bevorzugt beträgt der Anteil der Oberflächenbeschichtung in einem Partikel 0,1 - 20 Gewichtsprozent (Gew.-%), bevorzugt von 0,5 - 10 Gew.-%, besonders bevorzugt von 1 - 7,5 Gew.-% bezogen auf das Gewicht der Trägerpartikel. Durch eine derartige Oberflächenbeschichtung der Trägerpartikel kann gewährleistet werden, dass die Ladungsträger auf der Oberfläche überall ausreichend dicht beieinander liegen, um Anionen langfristig zu binden bzw. immobilisieren. Außerdem wird durch eine derart dichte Beschichtung auch die Bindung einer Vielzahl von Anionen ermöglicht.

Eine geringere dichte der Ladungszentren der Oberflächenbeschichtung könnte dazu führen, dass bestimmte Bereiche der Partikel Anionen nicht effektiv binden können oder diese Bereiche nach Bindung einiger Anionen gesättigt sind und keine weiteren Anionen mehr gebunden werden können.

Bevorzugt umfasst die Oberflächenbeschichtung ein Polymer. Es ist besonders einfach Polymeren eine Vielzahl von (partial-) Ladungen zu verleihen. Diese befinden sich ausreichend nah beieinander, um Anionen ggf. sogar durch mehrere Ladungszentren binden zu können. Somit könnte ein Chelat-Effekt ausgenutzt werden. In diesem Fall könnte darüber hinaus - die entsprechende Mobilität der Polymerketten vorausgesetzt - auch bewirkt werden, dass die Ladungszentren sich zum Anion hin ausrichten und auf der dem Anion entgegenstehenden Seite der Polymerkette ein weitgehend unpolarer Rest vorliegt, wodurch Wasser abgewiesen und ein erneutes herauslösen des Anions durch Wasser verhindert wird. Bevorzugt weist ein Polymer Aminogruppen auf. Es können jedoch auch andere Polymere zusätzlich vorhanden sein, die ggf. den Partikeln weitere positive Eigenschaften verleihen. In einer besonders bevorzugten Aufführungsform handelt es sich bei einem Aminogruppen aufweisenden Polymer um ein aminomodifiziertes Alkylpolysiloxan. Im Folgenden wird aminomodifiziertes Alkylpolysiloxan als Beispiel für ein Aminogruppen aufweisendes Polymer herangezogen. Da es für die Wirkungsweise unerheblich ist, ob die Aminogruppen Teil (oder Folgeprodukt) der Monomere sind, die die Polymerkette bilden oder ob diese nach der Polymerisation der Polymerkette zugefügt wurden, wird im Folgenden kein Unterschied zwischen diesen Polymeren gemacht. Als aminomodifiziertes Alkylpolysiloxan sollen somit auch Polymere verstanden werden, bei denen die Aminogruppen Teil (oder Folgeprodukt) der Monomere sind.

Besonders bevorzugt ist demnach ein Füllstoff bei dem die Oberflächenbeschichtung dazu geeignet ist, Anionen zu binden und/oder zu komplexieren. Als Bindung soll dabei jegliche Art der Wechselwirkung verstanden werden, durch die die Beweglichkeit der Anionen zumindest temporär eingeschränkt wird. Das Komplexieren eines Anions (z.B. durch ein Chelat) stellt somit eine bevorzugte Variante einer Bindung dar.

Bevorzugt ist, dass die Oberflächenbeschichtung (der (Füllstoff-) Partikel) farblos ist und weiter bevorzugt, dass die Oberflächenbeschichtung (der (Füllstoff-) Partikel) auch bei Komplexierung der verfärbenden Inhaltsstoffe farblos bleibt. Durch diese bevorzugte Ausführungsform kann gewährleistet werden, dass durch die Oberflächenbeschichtung selbst keine Verfälschung der gewünschten Farbe der Oberflächenbehandlungszusammensetzung oder der daraus resultierenden Oberflächenbeschichtung (des damit behandelten Materials) hervorgerufen wird. Bevorzugt ist die Verbindung der Oberflächenbeschichtung (der (Füllstoff-) Partikel) mit Anionen farblos. Dadurch kann gewährleistet werden, dass auch bei der Bindung der Anionen kein unerwünschter Farbeffekt auftritt.

Da wie oben erwähnt insbesondere bei Holzwerkstoffen durch das (Durch-) Bluten des Holzes unerwünschte Farbveränderungen auftreten können ist die den Füllstoff umfassende Oberflächenbehandlungszusammensetzung bevorzugt eine Holzbehandlungszusammensetzung. Somit kann das Holz oberflächlich mit dem Füllstoff beaufschlagt werden, der die Partikel mit der Oberflächenbeschichtung umfasst, die dem jeweiligen Partikel eine positive Oberflächenladung verleihen. Durch diese positive Oberflächenladung kann das Durchbluten reduziert und der Effekt der austretenden Anionen auf das Erscheinungsbild des behandelten Holzes verringert werden.

Die oben dargelegte Aufgabe wird erfindungsgemäß durch die Verwendung gemäß Patentanspruch 1 gelöst. Die Erfindung betrifft somit die Verwendung eines Partikels der einen Trägerpartikel, welcher ein Trägerpartikelgröße (d₅₀, Sedigraph) aufweist, die im Bereich zwischen 1 µm und 5 mm liegt, wobei die Partikel ausgewählt sind aus einer Gruppe, die Talk, Glimmer, Glaskugeln, Glasmehl, Erdalkalicarbonate, CaCO₃, Kaolin (nativ und/oder kalziniert), Quarz, Quarzmehl und Diatomeenerde umfasst, und eine Oberflächenbeschichtung umfasst, die dem jeweiligen Partikel eine positive Oberflächenladung verleiht, wobei die Oberflächenbeschichtung ein Polymer umfasst, welches Aminogruppen aufweist, zur Behandlung von Holz. Die Partikel weisen dabei bevorzugt die Eigenschaften auf, die bereits oben für die Partikel des Füllstoffs für eine Oberflächenbehandlungszusammensetzung beschrieben wurden.

Besonders bevorzugt ist die Verwendung eines Partikels, bei der die Behandlung der Reduzierung des Blutens von Holz dient.

Eine Variante der Verwendung zeichnet sich dadurch aus, dass die Partikel Bestandteil einer Oberflächenbehandlungszusammensetzung sind. Die Oberflächenbehandlungszusammensetzung liegt dabei bevorzugt flüssig vor. Besonders bevorzugt ist, dass die Oberflächenbehandlungszusammensetzung als Suspension vorliegt. Dadurch wird das Auftragen und insbesondere ein gleichmäßiges Auftragen der Partikel auf eine Oberfläche vereinfacht. Außerdem bestehen etablierte Methoden und entsprechende Geräte, die einen solchen Auftrag ermöglichen, vereinfachen oder sogar voll- oder teilautomatisiert ermöglichen.

Eine bevorzugte Variante zeichnet sich weiterhin dadurch aus, dass die Oberflächenbehandlungszusammensetzung mit einer Nassschichtdicke zwischen 50 µm und 1000 µm aufgetragen wird. Eine solche Nassschichtdicke gewährleistet, einen einfachen und homogenen Auftrag mit aus dem Stand der Technik (z.B. für Lacke, Lasuren oder Farbanstriche) bekannten Geräten. Außerdem wird durch diese Nassschichtdicken auch nach Trocknung eine ausreichender Materialstärke und somit eine ausreichende Menge an aktiven Partikeln gewährleistet. Als besonders bevorzugt haben sich Nassschichtdicken zwischen 100 µm und 500 µm, besonders bevorzugt zwischen 200 µm und 300 µm erwiesen.

Wenn die Partikel als Teil einer Oberflächenbehandlungszusammensetzung verwendet werden, hat sich als besonders vorteilhaft herausgestellt, wenn diese in einem Anteil von bis zu 50 Gew.-%, bevorzugt 1 - 30 Gew.-%, weiter bevorzugt 2 - 20 Gew.-% zugesetzt werden. Diese und alle weiteren diesbezüglich angegebenen Gewichtsanteile in dieser Beschreibung beziehen sich jeweils auf das Gewicht der Oberflächenbehandlungszusammensetzung ohne den Zusatz der Partikel. Besonders bevorzugt werden die Partikel in einem Anteil von 3 - 15 Gew.-% der Oberflächenbehandlungszusammensetzung zugesetzt.

Bevorzugt ist eine Verwendung, bei der die Partikel und insbesondere deren Oberflächenbeschichtung in der Oberflächenbehandlungszusammensetzung protoniert, bevorzugt mehrfach protoniert vorliegen. Weiter bevorzugt weist die Oberflächenbehandlungszusammensetzung dabei einen pH-Wert von unter 13, bevorzugt zwischen 1 und 12, weiter bevorzugt zwischen 3 und 11, besonders bevorzugt zwischen 5 und 10 auf.

Weitere Vorteile und Ausführungsformen der Erfindung werden anhand der folgenden Figuren und Beispiele erläutert.

Darin zeigen:
Fig. 1 einen Vergleich verschiedener Prüfkörper eines behandelten Holzes nach Behandlung mit verschiedenen Oberflächenbehandlungszusammensetzungen;
Fig. 2 eine Darstellung verschiedener Prüfkörper aus Holz nach Beaufschlagung mit einer Oberflächenbehandlungszusammensetzung, die sich aus einem Marktprodukt und einem Zusatz von wie oben beschriebenen Füllstoffen zusammensetzt; und
Fig. 3A und 3B einen Vergleich eines reinen Bindemittels, das als besonders geeignet beschrieben ist, das Durchbluten der Holzinhaltsstoffe zu verhindern mit einer Zusammensetzung, die neben diesem Bindemittel auch 35 Gew.-% der oben beschriebenen Füllstoffe beinhaltet.

In der Tabelle 1 sind beispielhafte Ausführungen für Füllstoffpartikel dargestellt. Als Basis der Partikel dient zum einen ein nativer Kaolin mit einer Partikelgröße (d₅₀) < 2µm. Dieser ist als Kaolin A gekennzeichnet. Bei dem mit Kaolin B gekennzeichneten Trägermaterial handelt es sich ebenfalls um einen nativen Kaolin. Dessen durchschnittliche Partikelgröße (d₅₀) ist jedoch etwas größer und beträgt ca. 2,5 µm. QM 2500 bezeichnet ein Quarzmehl, dessen Partikelgröße (d₅₀) ungefähr 5 µm beträgt. Zur Beschichtung dieser Partikel wurde ein aminomodifiziertes Alkylpolysiloxan, welches in der Tabelle lediglich verkürzt als "Polysiloxan" bezeichnet ist, verwendet. Die jeweils genutzte Auftragsmenge liegt zwischen 0,1 und 20 Gew.-%. Für die in Tabelle 1 gezeigten Beispiele sind die jeweiligen Prozentangaben angegeben.

| Probe | Oberflächenldg qual. | Oberflächenldg quant. [mV] | C-Gehalt [Gew.-%] | Flächenwiderstand |
|---|---|---|---|---|
| Kaolin A pur | Anionisch | -46 | | |
| Kaolin A 0,95% Polysiloxan | Kationisch | 43 | 0,36 | 2,2 MΩ |
| Kaolin A + 3,5% Polysiloxan | Kationisch | 54 | 1,27 | |
| Kaolin A + 4% Polysiloxan | Kationisch | 54 | 1,41 | |
| Kaolin A + 5,3% Polysiloxan | Kationisch | 64 | 1,95 | 96 kΩ |
| Kaolin B pur | Anionisch | -55 | | |
| Kaolin B + 1% Polysiloxan | Kationisch | 53 | | 6,8 MΩ |
| Kaolin B + 2,5% Polysiloxan | Kationisch | 55 | | 411 kΩ |
| Kaolin B + 5% Polysiloxan | Kationisch | 62 | | 277 kΩ |
| QM 2500 | Anionisch | -27 | | |
| QM + 1% Polysiloxan | Kationisch | 51 | | 83 kΩ |
| QM + 2,5% Polysiloxan | Kationisch | 85 | | 119 kΩ |
| QM + 5% Polysiloxan | Kationisch | 64 | | 66 kΩ |

Wie der Tabelle zu entnehmen ist, sind die reinen Trägermaterialien anionisch. Zumindest weisen sie jedoch eine negative Oberflächenladung auf. Durch die entsprechende Oberflächenmodifizierung erhalten die so entstehenden Kompositpartikel eine positive Oberflächenladung. Je nach Trägerpartikel und aufgetragener Menge der Oberflächenbeschichtung liegt die Oberflächenladung im Bereich zwischen etwa 40, fast 90 mV. Zu beachten ist, dass die in Tabelle 1 angegebenen Messwerte mit einem vergleichsweise großen Fehler behaftet sind, so dass auch deutliche Abweichungen von den angegebenen Werten vorliegen können. Jedoch ist auch unter Berücksichtigung dieser möglichen Abweichung aus Tabelle 1 ersichtlich, dass bei entsprechender Oberflächenmodifizierung nicht nur die Ladung in den positiven Bereich verschoben wird, sondern auch, dass mit steigender Menge der aufgetragenen Oberflächenbeschichtung tendenziell auch die Oberflächenladung ansteigt.

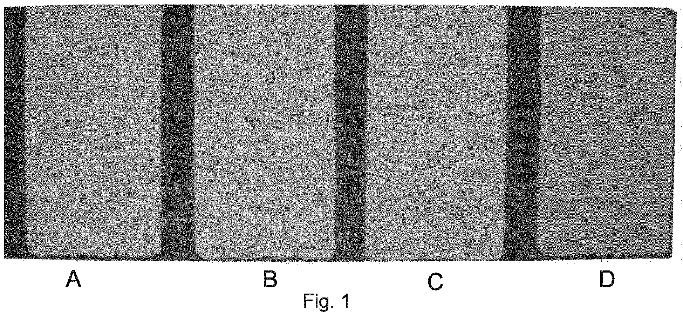

Figur 1 zeigt einen Vergleich von verschiedenen Prüfkörpern, die unter Verwendung von Kaolin A erhalten worden sind, das mit 5% des aminomodifizierten Alkylpolysiloxans erhalten worden ist. Dieses wurde als wässrige Zubereitung verwendet und auf den Trägerpartikel aufgetragen. Der so erhaltene Kompositpartikel wird einer weißen Holzgrundierung zugesetzt. Als weißes Pigment enthält dieses Titandioxid (TiO₂). Als Testsubstrat wird Merbauholz verwendet. In den gezeigten Beispielen wurden auf die Prüfkörper verschiedene Formulierungen aufgebracht, bei denen sich das Verhältnis von beschichtetem Kaolin zu unbeschichtetem Kaolin unterschied. Prüferkörper A (links) wurde mit einer Formulierung behandelt, die 15 Gew.-% Oberflächenbeschichteten Füllstoff enthielt und frei von unbehandeltem Kaolin A war. Bei dem Prüferkörper B (zweiter von links) wurden 5 Gew.-% des oberflächenbeschichteten Füllstoffs durch 5 Gew.-% des unbehandelten Kaolins ersetzt. Dementsprechend weist diese Formulierung 10 Gew.-% des oberflächenbeschichteten Partikels auf und 5 Gew.-% des unbeschichteten. Für Prüfkörper C (zweiter von rechts) wurden die Mengenanteile nochmals zugunsten des unbehandelten Kaolins verschoben. Die dort verwendete Formulierung enthielt lediglich 5 Gew.-% des oberflächenbeschichteten Kaolins, dafür jedoch 10 Gew.-% des unbeschichteten Kaolins A. Als Vergleich ist mit Prüfkörper D (rechts) ein Holz gezeigt, das mit einer Oberflächenbehandlungszusammensetzung behandelt worden ist, die keine Füllstoffpartikel enthält, die mit aminomodifizierten Polysiloxanen oberflächenbeschichtet sind.

Wie dieser Figur zu entnehmen ist, sind im rechten Vergleichsbeispiel deutliche Verfärbungen durch Durchbluten zu erkennen. Neben einer Vielzahl von schwarzen Punkten sind auch deutliche linienförmige, meist als Querstreifen ausgebildete Verfärbungen zu sehen. Meist folgen diese der Faserstruktur des Holzes des Prüfkörpers. Die Stärke derartiger Verfärbungen nimmt von rechts nach links ab. Bereits ein Anteil von 5 Gew.-% des oberflächenbeschichteten Kompositpartikels führt zu einer deutlichen Reduzierung der Farbveränderungen. Bei einem Anteil von 10 Gew.-% können die auftretenden Verfärbungen nochmals deutlich reduziert werden. Sowohl bei Vergleich des Prüfkörpers B mit C als auch mit D ist zu erkennen, dass das Durchbluten deutlich reduziert ist. Bei weiterer Erhöhung des Anteils des oberflächenbeschichteten Kompositpartikels ist keine vergleichbar deutliche Reduzierung des Durchblutens zu erkennen. Auch wenn sich das Durchbluten jedes Prüfkörpers individuell unterscheidet, ist zu erkennen, dass bei einer Erhöhung des Anteils des Kompositpartikels auf 15 Gew.-% (A) die weitere Reduzierung der Verfärbungen zumindest weniger auffällig ist als zwischen den Prüfkörpern B und C.

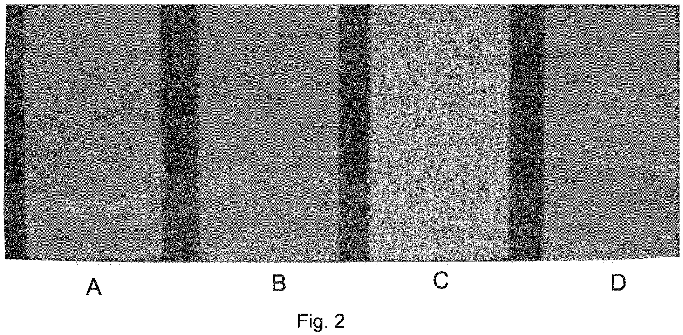

Die in Figur 1 gezeigten Prüfkörper stellen die Ergebnisse eines Versuchs dar, der in einer frühen Phase der Entwicklung erhalten worden ist. Eine weitere Optimierung der verwendeten Zusammensetzung kann dazu führen, dass die Verfärbungen, die durch Durchbluten hervorgerufen werden, weiter reduziert werden können. Ein solches Beispiel ist in Figur 2 gezeigt. Insbesondere die Anpassung der Benetzungseigenschaften und/oder der Viskosität der Oberflächenbehandlungszusammensetzung hat einen großen Einfluss auf das Auftreten von lokalen Verfärbungen. Bei einer besseren Benetzung, die beispielsweise aber nicht zwangsläufig durch eine Verringerung der Viskosität erreicht werden kann, kann das Durchbluten bzw. die Anzahl einzelner Poren, die sichtbar werden, weiter reduziert werden.

In Figur 2 ist dazu ein Beispiel gezeigt, bei dem ein auf dem Markt befindliches Produkt (Marktreferenz RM2), welches Durchbluten verhindern soll, mit einem wie oben beschriebenen oberflächenmodifizierten Füllstoff versetzt wurde. Prüferkörper A (links) stellt einen mit RM2 behandelten Prüfkörper dar. Es sind deutliche Verfärbungen zu erkennen. Bereits durch den Zusatz von unbehandeltem Kaolin A kann dies reduziert werden. B (zweite von links) zeigt einen Prüfkörper, der durch Beschichtung mit einer Zusammensetzung aus RM2 mit einem zusätzlichen Anteil von 15 Gew.-% Kaolin A erhalten worden ist. C zeigt einen Prüfkörper, bei dem der Marktreferenz RM2 15 Gew.-% des oben beschriebenen oberflächenmodifizierten Füllstoffs zugesetzt sind. Sowohl im Vergleich zu A als auch zu B ist eine deutliche Reduzierung der Verfärbungen und somit des Durchblutens zu erkennen. Als Vergleich ist in D ein Prüfkörper gezeigt, bei dem eine Oberflächenbehandlung durch eine Zusammensetzung erfolgt ist, die RM2 und 15 Gew.-% Calciumkarbonat (CaCO₃) enthielt.

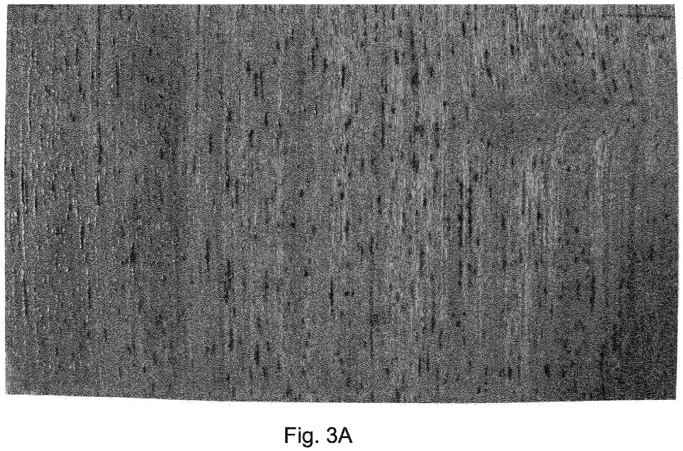

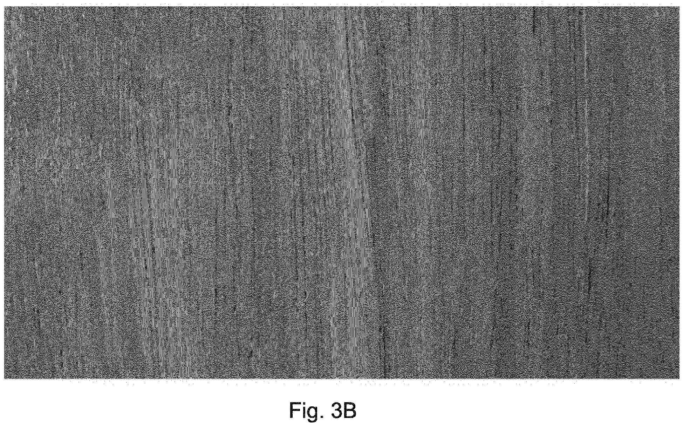

Durch diese Versuche kann gezeigt werden, dass ein Zusatz unbehandelter Füllstoffe (also nicht oberflächenmodifiziertes Kaolin oder Calciumkarbonat) kaum zu einer Verringerung des Durchblutens führt. Es kann davon ausgegangen werden, dass diese Substanzen lediglich eine geringe Sperrwirkung auf die aus dem Holz austretenden Substanzen haben. Im Gegensatz dazu kann der wie in C gezeigte oberflächenbehandelte Füllstoff im Zusammenspiel mit marktbekannten Produkten deren Eigenschaften signifikant verbessern. Es ist deutlich zu erkennen, dass das Durchbluten bei Prüfkörper C gegenüber dem Prüfkörper A deutlich reduziert ist.
In einigen Zusammensetzungen kann es nachteilig sein, wenn farbige oder weiße Trägerpartikel eingesetzt werden. Insbesondere wenn transparente Oberflächenbeschichtungen für die Prüfkörper vorgesehen sind, stellt dies einen Nachteil dar. In Figur 3 sind daher Prüfkörper gezeigt, bei denen als Trägermaterial Glaspartikel verwendet worden sind. Diese Glaspartikel wurden analog den zuvor beschriebenen Kaolinpartikeln durch ein aminomodifiziertes Alkylpolysiloxan oberflächenbeschichtet. In den in Figur 3 gezeigten Beispielen wurde ein reines Bindemittel, das jedoch Durchbluten der Holzinhaltsstoffe verhindern soll (A) mit einer Formulierung verglichen, bei der diesem Bindemittel 35 Gew.-% des oberflächenmodifizierten Füllstoffs (B) zugesetzt wurden. Auch hier ist eine deutliche Reduktion der auftretenden Verfärbung bei der Behandlung mit der Zusammensetzung zu erkennen, die die durch das aminomodifizierte Alkylpolysiloxan oberflächenbeschichten Partikel enthielt.

Wie oben erwähnt, handelt es sich bei dem Träger für den oberflächenmodifizierten Füllstoff um Glaspartikel. Somit kann gezeigt werden, dass die positive Eigenschaft der Zusammensetzung, die das Durchbluten signifikant verringert, nicht auf Eigenschaften des Trägerpartikels, wie z.B. Kaolin (vgl. Fig. 2), zurückzuführen ist, sondern im Wesentlichen von der Oberflächenbeschichtung dieser Partikel abhängt.

Für alle in den Figuren 1 - 3 gezeigten Prüfkörper wurde eine Nassschichtdicke von 200 µm aufgetragen. Die Ergebnisse sind somit direkt miteinander vergleichbar. Die Schichtdicken können jedoch deutlich von diesem oben genannten Wert abweichen und sind nicht auf diesen beschränkt. Beispielsweise konnte auch gezeigt werden, dass bei einer Schichtdicke von 500 µm ein analoger positiver Effekt durch Zusammensetzungen zu erreichen ist, die Füllstoffe mit den oberflächenmodifizierten Partikeln, wie oben beschrieben, enthielten. Analoge Ergebnisse konnten auch mit Füllstoffen erzielt werden, die Partikel mit anderen Gewichtsanteilen der Oberflächenbeschichtung bezogen auf den Trägerpartikel aufweisen. Auch hier konnte gezeigt werden, dass diese jedenfalls das Durchbluten reduzierten. Die Effizienz ist dabei zumindest in geringem Maße von dem Mengenanteil der Oberflächenbeschichtung auf dem Trägerpartikel abhängig.

Auch vergleichende Versuche auf anderen Holzarten konnten belegen, dass auch auf diesen das Durchbluten reduziert werden kann. Die Wirksamkeit derartiger Oberflächenbehandlungszusammensetzungen ist demnach nur in geringem Maße von der genauen Zusammensetzung der aus dem Holz austretenden Stoffe abhängig, sondern wirkt nahezu unabhängig von der genauen Zusammensetzung der austretenden Stoffe.

Es wird darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Verwendung eines Partikels der einen Trägerpartikel, welcher ein Trägerpartikelgröße (d₅₀, Sedigraph) aufweist, die im Bereich zwischen 1 µm und 5 mm liegt, wobei die Partikel ausgewählt sind aus einer Gruppe, die Talk, Glimmer, Glaskugeln, Glasmehl, Erdalkalicarbonate, CaCO₃, Kaolin (nativ und/oder kalziniert), Quarz, Quarzmehl und Diatomeenerde umfasst, und eine Oberflächenbeschichtung umfasst, die dem jeweiligen Partikel eine positive Oberflächenladung verleiht, wobei die Oberflächenbeschichtung ein Polymer umfasst, welches Aminogruppen aufweist, zur Behandlung von Holz.

2. Verwendung nach Anspruch 1, **dadurch gekennzeichnet, dass** die Behandlung von Holz der Reduzierung des Blutens von Holz dient.

3. Verwendung nach Anspruch 1 oder 2, **dadurch gekennzeichnet, dass** die Partikel Bestandteil einer Holzbehandlungszusammensetzung sind, wobei die Holzbehandlungszusammensetzung bevorzugt flüssig, weiter bevorzugt als Suspension vorliegt.

4. Verwendung nach Anspruch 3, **dadurch gekennzeichnet, dass** die Holzbehandlungszusammensetzung mit einer Nassschichtdicke zwischen 50 µm und 1000 µm, bevorzugt zwischen 100 µm und 500 µm, besonders bevorzugt zwischen 200 µm und 300 µm aufgetragen wird.

5. Verwendung nach Anspruch 3 oder 4, **dadurch gekennzeichnet, dass** die Partikel der Holzbehandlungszusammensetzung in einem Anteil von bis zu 50 Gew.-%, bevorzugt 1 - 30 Gew.-%, weiter bevorzugt 2 - 20 Gew.-%, besonders bevorzugt 3 - 15 Gew.-% zugesetzt sind.

6. Verwendung nach einem der Ansprüche 4 - 5, **dadurch gekennzeichnet, dass** die Partikel und insbesondere deren Oberflächenbeschichtung in der Holzbehandlungszusammensetzung protoniert, bevorzugt mehrfach protoniert vorliegen, wobei die Holzbehandlungszusammensetzung bevorzugt einen pH-Wert unter 13, bevorzugt zwischen 1 und 12, weiter bevorzugt zwischen 3 und 11, besonders bevorzugt zwischen 5 und 10 aufweist.

## Claims

1. Use of a particle, which comprises a carrier particle that has a carrier particle size (d₅₀, Sedigraph) which is in the range between 1 µm and 5 mm, wherein the particles are selected from a group comprising talc, mica, glass beads, glass powder, alkaline earth metal carbonates, CaCO₃, kaolin (native and/or calcined), quartz, quartz powder and diatomaceous earth, and a surface coating which gives the respective particle a positive surface charge, wherein the surface coating comprises a polymer, which has amino groups, for treating wood.

2. Use according to claim 1, **characterised in that** the wood treatment is used to reduce the bleeding of wood.

3. Use according to either claim 1 or 2, **characterised in that** the particles are a component of a wood-treatment composition, the wood-treatment composition preferably being liquid, and more preferably being a suspension.

4. Use according to claim 3, **characterised in that** the wood-treatment composition is applied with a wet-film thickness of between 50 µm and 1000 µm, preferably between 100 µm and 500 µm, more preferably between 200 µm and 300 µm.

5. Use according to either claim 3 or 4, **characterised in that** the particles in the wood-treatment composition are added in a proportion of up to 50 wt.%, preferably of from 1 - 30 wt.%, more preferably of from 2 - 20 wt.%, most preferably of from 3 - 15 wt.%.

6. Use according to any of claims 4 - 5, **characterised in that** the particles and in particular the surface coating thereof in the wood-treatment composition are protonated, preferably protonated multiple times, the wood-treatment composition preferably having a pH of less than 13, preferably between 1 and 12, more preferably between 3 and 11, most preferably between 5 and 10.

## Revendications

1. Utilisation pour le traitement du bois de particules qui comportent des particules de support, lesquelles présentent une taille de particule de support (d₅₀, Sedigraph) qui se situe dans la plage entre 1 µm et 5 mm, les particules étant choisies dans un groupe qui comporte le talc, le mica, les billes de verre, la farine de verre, les carbonates alcalino-terreux, CaCO₃, le kaolin (natif et / ou calciné), le quartz, la farine de quartz et la terre à diatomées, et un revêtement de surface qui confère aux particules respectives une charge de surface positive, le revêtement de surface comportant un polymère, lequel présente des groupes amino.

2. Utilisation selon la revendication 1, **caractérisée par le fait que** le traitement du bois sert à réduire le saignement du bois.

3. Utilisation selon l'une des revendications 1 ou 2, **caractérisée par le fait que** les particules font partie d'une composition de traitement du bois, la composition de traitement du bois étant de préférence liquide, de façon davantage préférée sous forme de suspension.

4. Utilisation selon la revendication 3, **caractérisée par le fait que** la composition de traitement du bois est appliquée avec une épaisseur de couche humide entre 50 µm et 1000 µm, de préférence entre 100 µm et 500 µm, de façon particulièrement préférée entre 200 µm et 300 µm.

5. Utilisation selon l'une des revendications 3 ou 4, **caractérisée par le fait que** les particules de la composition de traitement du bois sont ajoutées dans une proportion allant jusqu'à 50 % en poids, de préférence de 1 à 30 % en poids, de façon davantage préférée de 2 à 20 % en poids, de façon particulièrement préférée de 3 à 15 % en poids.

6. Utilisation selon l'une quelconque des revendications 4 et 5, **caractérisée par le fait que** les particules et en particulier leur revêtement de surface dans la composition de traitement du bois sont protonées, de préférence polyprotonées, la composition de traitement du bois présentant de préférence une valeur de pH au-dessous de 13, de préférence entre 1 et 12, de façon davantage préférée entre 3 et 11, de façon particulièrement préférée entre 5 et 10.
